# EUROPEAN PATENT APPLICATION

(11) **EP 1 885 040 A2**
(43) Date of publication of application: **06.02.2008**
(21) Application number: 07113386.2
(22) Date of filing: 30.07.2007
(51) Int. Cl.: H02J 9/08

(54) **An emergency power supply apparatus**

(30) Priority: 04.08.2006 IT PR20060075
(71) Applicant: Dometic W.T.A. Societa' a Responsabilita' Limitata, 47100 Forli' (IT)
(72) Inventor: Francini, Vanes Sergio, 47100 Forli' (IT); Paci, Enrico, 47100 Forli' (IT)
(74) Representative: Gotra, Stefano

(57) **Abstract**

An emergency power supply apparatus (1) comprises a generator set (2), a rectifier (3) connected between the output of the generator set (2) and a direct voltage station (4), a voltage inverter (5) from direct to alternating, connected between the direct voltage station (4) and a board (6) provided with a switch, said board (6) being connectable to a load (17) to be powered, a battery (7) electrically connected to said direct voltage station (4) and connectable to a photovoltaic generator (14), a charger (8) connected to said board (6) and active on said battery (7), and a control logic (9) operatively connected to the board (6), to the battery (7) and to the generator set (2) to manage the operation of the apparatus automatically.
Known emergency electrical power supply apparatuses employ a generator set with automatic start, which has the disadvantage of not assuring continuity of service in a starting transitory of the generator set.

## Description

The present invention relates to an emergency power supply apparatus.

The present invention refers to electrical power applications, in which there is a need to supply power to a load (e.g. at the voltage of 230 V and at the frequency of 50 Hz) even in the absence of the mains power supply, such as the one provided by ENEL, in the case of Italy.

This need is particularly acute, for example, in situations in which the mains electrical power supply is altogether absent or is subject to frequent interruptions, such as hard to reach mountain sites.

In this sector, the use is known of generator sets, comprising an electrical generator (alternator) coupled to an endothermic engine. In this way, having available a tank of fuel for the operation of the engine, it is possible to produce electrical energy autonomously with respect to the mains power supply.

In particular, generator sets with automatic start are known. In this case, the loads to be powered are ordinarily connected to the mains; when a detector senses that the mains is not powered, it automatically commands the start of the generator set and switches the connection of the loads from the mains to the generator set.

However, said solutions present a limitation in terms of intervention times of the generator set (which is in the order of some seconds) and hence of the resumption of power supply to the loads. In other words, generator sets with automatic operation do not assure the continuity of the power supply of the loads in the starting transitory of the generator set itself.

With regard to the cases in which the mains power is altogether absent, the generator set nonetheless has some limitations, in terms of quality of the energy delivered (i.e. with regard to constancy of frequency and harmonic distortion) and service continuity (if the generator set shuts down accidentally, there is the problem of electrically powering the generator set itself to start it again). It should be noted that a traditional generator set has a high (over 5%) and non stabilised level of harmonic distortion.

It should also be noted that a traditional generator set cannot be connected directly to the mains because it lacks synchronism mechanisms.

The object of the present invention is to eliminate the aforesaid drawbacks and to make available an emergency power supply apparatus able to satisfy an electrical power load even in the temporary or permanent absence of the mains, guaranteeing the utmost reliability, versatility and continuity of service.

Said object is fully achieved by the apparatus of the present invention, which are characterised by the content of the claims set out below and in particular in that it comprises, in combination:
- a generator set;
- a rectifier connected between the output of the generator set and a direct voltage station;
- a voltage inverter from direct to alternating, connected between the direct voltage station and a board provided with a switch, said board being connectable to a load to be powered;
- a battery electrically connected to said direct voltage station;
- a charger connected to said board and active on said battery;
- a control logic operatively connected to the board, to the battery and to the generator set to manage the operation of the apparatus automatically.

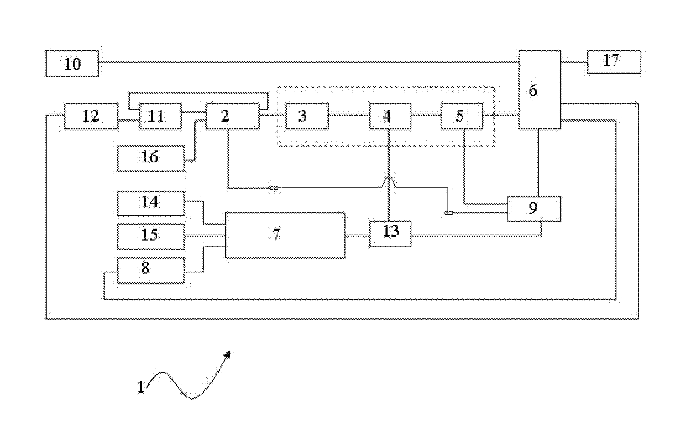

This and other characteristics shall become more readily apparent from the description that follows of a preferred embodiment, illustrated purely by way of non limiting example in the accompanying drawing table in which the sole figure shows a functional diagram of the apparatus of the present invention.

In the figure, the emergency power supply apparatus according to the present invention is indicated with the reference numeral 1.

Said apparatus comprises a generator set 2 (substantially known, e.g. comprising a synchronous generator and a Diesel engine). To the output of the generator set 2 is connected a rectifier 3, able to connect the generator set 2 with a direct voltage station 4; said direct voltage station 4 is connected to a voltage inverter 5 from direct to alternating, which, in turn, is connected to a board 6. The station 4 is merely a direct current bus, i.e. a direct voltage conductor (a node).

Moreover, the apparatus 1 comprises a battery 7 electrically connected to said direct voltage station 4. The battery 7 is a battery of a substantially known type, e.g. a 48 V. battery.

The apparatus 1 also comprises a charger 8 connected to the board 6 to receive power and active on the battery 7 to charge it, according to the

### prior art.

Moreover, the apparatus 1 originally comprises a control logic 9 operatively connected to the board 6, to the battery 7 and to the generator set 2 (and possibly to the inverter 5 as well), to manage the operation of the apparatus 1 automatically.

The board 6 is connectable to an electrical power supply source 10, or to the mains electrical power supply, if it is available.

It should be noted that, originally, the battery 7 is operatively connected to the generator set 2 to supply with electrical power. This advantageously assures a high reliability of the generator set 2.

Moreover, in the preferred embodiment illustrated herein, the apparatus 1 comprises a supplementary battery 11 connected to the generator set 2 to supply it with electrical power. In this case, it is not indispensable The supplementary battery 11 is preferably a 12 V battery. Note also that, in the preferred embodiment illustrated, the supplementary battery 11 supplies power to the control logic 9.

Also according to the preferred embodiment illustrated, the apparatus 1 comprises a supplementary charger 12, connected to the board 6 and active on said supplementary battery 11.

The apparatus 1 also comprises, preferably, a DC-DC voltage converter block 13 interposed between the battery 7 and the inverter 5. Said DC-DC voltage converter block, operating in direct voltage, is substantially known; for example, it can be constituted by a voltage booster.

The apparatus 1 also comprises, originally, a photovoltaic generator 14 connected to the battery 7 to charge it and/or connected to another alternative energy source, such as a wind generator 15.

With regard to the fuel supply of an endothermic engine of the generator set 2, the generator set 2 is connected to a fuel tank 16.

It should be noted that the board 6 is provided with a switch (known in itself), and it is connectable to the loads to be powered, schematically indicated with the number 17 in the figure.

The control logic 9, originally, comprises means for automatically activating the generator set 2 as a function of a measured value of the level of charge of the battery 7 (and/or of the supplementary battery 11, if present).

The control logic 9, originally, also comprises means for automatically operating said switch in such a way that the generator set 2 is operatively connected to the charger 8 to charge the battery 7 (and to the supplementary charger 12, in the illustrated example, to charge the supplementary battery 11).

Moreover, the control logic 9, originally, comprises means for automatically operating said switch (which, in the illustrated example, is substantially integrated in the board 6) in such a way that the generator set 2 is operatively connected to said load 17 to power it. In this case, since between the generator set 2 and the load 17 are interposed the rectifier 3 and the inverter 5, the apparatus 1 advantageously guarantees the frequency stability and the harmonic quality of the electrical power supplied.

It should also be noted that the control logic 9, originally, comprises means for automatically operating said switch in such a way that the battery 7 is operatively connected to said load 17 to power it. In this way, the apparatus 1 guarantees the utmost service continuity, because the battery 7 serves as an interruptible power supply and enables to power the load 17 without voltage gaps, for a period of time equal to at least the duration of the starting transitory of the generator set 2.

Moreover, the control logic 9 comprises means for automatically operating said switch in such a way that the generator set 2 is operatively connected to said electrical power supply source 10 to inject electrical power into it. In this case, the apparatus 1 advantageously allows to inject electrical power supply into the mains grid synchronising the generator set 2 with the grid itself, thanks to the presence of the rectifier 3 and of the inverter 5.

The control logic 9 further comprises means for automatically transferring data to a serial port, to transmit them in output from the apparatus, e.g. to a PC or to a mobile telephone.

Therefore, the apparatus 1 originally enables a plurality of operating modes, thanks to the presence of the control logic 9, thus being particularly versatile.

In particular, a first operating mode is provided.

In this mode, there is no power delivery from the board 6. This mode serves only the purpose of assuring the operating condition of the battery 7 (and of the supplementary battery 11, if there is one) in case of long inactivity. The sole function is to control a signal provided by a timer (not shown, of a substantially known type), that is managed by the control logic 9. At pre-set time intervals signalled by the timer, the control logic 9 activates a start if the generator set 2, whose sole function is to power the charger 8. Therefore, the control logic 9 automatically starts the generator set 2, independently from the condition of charge of the battery 7, when it receives the signal from the timer. Once the generator set 2 is started, it is shut down when the battery 7 (and the supplementary battery 11, if there is one) is completely charged, but in any case never before at least 1 hour of operation of the generator set 2 and never after 4 hour of operation of the generator set 2. The signal of the timer has a cadence for example of ten days. In any case, the control logic 9 starts the generator set 2 automatically when it detects that the supplementary battery 11 (if one is present) has a low charge.

Moreover, a second operating mode is provided.

In this mode the load 17 is powered by the electrical power supply source 10, i.e. by the mains electrical grid. The DC-DC voltage converter block 13 is on (in standby) and ready to power the inverter 5, which in turn is active and ready to generate a sinusoidal output voltage in phase with the mains electrical grid. In this phase, the charger 8 is activated. As soon as the supply of energy is interrupted, a mains presence detector (not illustrated, of a substantially known type), managed by the control logic 9, activates the output of the inverter 11 and switches the load 17 on the output of the inverter, which is thus powered with the energy drawn from the battery 7 through the system constituted by the DC-DC voltage converter block 13 and by the inverter 5. In this phase, the charger 8 is deactivated. Simultaneously, the control logic 9, receiving a missing mains signal, waits for a pre-set time (e.g. five minutes), then starts the generator set 2. The generator set 2 is started before said pre-set time expires, if a low battery 7 signal arrives. After the start, the generator set 2 powers the inverter 5 and then the load 17, while the DC-DC voltage converter block 13 returns to the standby mode. The charger 8, being powered by the generator set 2, is activated and recharges the battery 7. When the power supply on the mains (if it is present) is restored, the mains presence detector does not deactivate the inverter 5 instantaneously, but waits about three seconds for mains voltage to stabilise and the inverter 5 to synchronise with the mains again. At this point, the load 17 is shifted on the mains grid, the inverter 5 is deactivated and the generator set 2 is shut down. The charge of the battery 7 may be completed by drawing energy from the mains grid. Note that, in said second operating mode, the control logic 9 starts the generator set 2 automatically, regardless of whether the mains is present, when it receives the signal coming from the timer. The generator set 2 is started, for example, every ten days of inactivity, for time of about half an hour.

Moreover, a third operating mode is provided.

The control logic 9 activates the DC-DC voltage converter block 13 which in turn activates the inverter 5. In this way, the applied load 17 is powered by the battery 7 through the system constituted by the DC-DC voltage converter block 13 and inverter 5. In this phase, although the charger 8 is powered, it is disabled to prevent needless energy dissipation. Subsequently, before the battery 7 is completely discharged, the control logic 9 automatically starts the generator set 2, which powers the inverter 5. In this phase, the DC-DC voltage converter block 13 remains active but does not supply power and it is ready to intervene when the generator set 2 is shut down or during any load peaks. In concurrence with the start of the generator set 2, the control logic 9 reactivates the charger 8 and, as soon as the battery 7 returns to an operational condition, the generator set 2 is shut down and the load 17 supplied through the DC-DC voltage converter block 13 with the energy con drawn from the battery 7. The starting cycle of the generator set 2 just described is repeated when the battery 7 is discharged again. It should be noted that the control logic 9 starts the generator set 2 automatically, independently of the condition of charge of the battery 7, when it receives the signal coming from timer. This signal has preferably daily cadence to maintain charged the battery 7 (and the supplementary battery 11, if there is one) even in the absence of the load. In this case the generator set 2 is shut down when the battery 7 is completely charged, but after at least one hour of operation.

Moreover, a fourth operating mode is provided.

The control logic 9 allows, optionally, also to start the generator set 2 manually. When the generator set 2 is started, it powers the inverter 5 which provides energy to the load 17 originally applied to the battery 7 and to the charger 8. The DC-DC voltage converter block 13 in this mode remains off.

Moreover, a fifth operating mode is provided.

The control logic 9 activates the DC-DC voltage converter block 13 which in turn activates the inverter 5. In this way, the load 17 applied to the batter 7 is powered by the battery through the DC-DC voltage converter block 13 - inverter 5 system. In this phase, although the charger 8 is powered, it is disabled to avoid needless energy dissipation.

## Claims

1. An emergency power supply apparatus, **characterised in that** it comprises, in combination:
- a generator set (2);
- a rectifier (3) connected between the output of the generator set (2) and a direct voltage station (4);
- a voltage inverter (5) from direct to alternating, connected between the direct voltage station (4) and a board (6) provided with a switch, said board (6) being connectable to a load (17) to be powered;
- a battery (7) electrically connected to said direct voltage station (4);
- a charger (8) connected to said board (6) and active on said battery (7);
- a control logic (9) operatively connected to the board (6), to the battery (7) and to the generator set (2) to manage the operation of the apparatus automatically.

2. An apparatus as claimed in claim 1, wherein the battery (7) is connected to the generator set (2) to power it electrically.

3. An apparatus as claimed in claim 1, wherein the board (6) is connectable to an electrical power supply source (10).

4. An apparatus as claimed in claim 1, comprising a DC-DC voltage converter block (13) interposed between the battery (7) and the inverter (5).

5. An apparatus as claimed in claim 1, comprising a supplementary battery (11) connected to the generator set (2) to power it electrically.

6. An apparatus as claimed in claim 5, comprising a supplementary battery (12) connected to the generator set (6) and active on said supplementary battery (12).

7. An apparatus as claimed in claim 1, comprising a photovoltaic generator (14) connected to the battery (14) to charge it.

8. An apparatus as claimed in claim 1, wherein said control logic (9) comprises means for automatically activating the generator set (2) as a function of a measured value of the level of charge of the battery (7).

9. An apparatus as claimed in claim 1, wherein said control logic (9) comprises means for automatically activating said switch in such a way that the generator set (2) is operatively connected to said load (17) to power it.

10. An apparatus as claimed in claim 1, wherein said control logic (9) comprises means for automatically activating said switch in such a way that the generator set (2) is operatively connected to the charger (8) to charge the battery (7).

11. An apparatus as claimed in claim 1, wherein said control logic (9) comprises means for automatically activating said switch in such a way that the generator set (7) is operatively connected to said load (17) to power it.

12. An apparatus as claimed in claim 3, wherein said control logic (9) comprises means for automatically activating said switch in such a way that the generator set (2) is operatively connected to said electrical power supply source (10) to provide it with electrical power.

13. An apparatus as claimed in claim 1, wherein said control logic (9) comprises means for automatically transferring data to a serial port, to transmit them in output from the apparatus.
